# EUROPEAN PATENT APPLICATION

(11) **EP 1 803 690 A1**
(43) Date of publication of application: **04.07.2007**
(21) Application number: 06020912.9
(22) Date of filing: 05.10.2006
(51) Int. Cl.: C03B 18/14, C03C 23/00

(54) **Method and apparatus for manufacturing float glass**

(30) Priority: 06.10.2005 JP 2005293640
(71) Applicant: Nippon Sheet Glass Company Limited, Minato-ku Tokyo 1058552 (JP)
(72) Inventor: Mahana Yukinobu Nippon Sheet Glass Company Ltd., Tokyo 1058552 (JP); Umino Makoto Nippon Sheet Glass Company Ltd., Tokyo 1058552 (JP)
(74) Representative: Brommer, Hans Joachim

(57) **Abstract**

A method for manufacturing a float glass includes the steps of: feeding molten glass onto molten metal having a specific gravity greater than the molten glass and contained in a float glass making furnace and flowing the molten glass to the downstream side with the molten glass being floated on the surface of the molten metal, thereby forming the molten glass into a shape of plate. The method includes a further step of causing a foreign-substance entrapping metal under its molten state to contact an upper surface of the molten glass on the molten metal, the foreign-substance entrapping metal having a melting point lower than the softening point of the glass and being capable of entrapping either a precipitate which is precipitated on the upper surface of the molten glass or an attachment which is formed thereon.

## Description

The present invention relates to a method for manufacturing a float glass, comprising the steps of feeding molten glass onto molten metal having a specific gravity greater than the molten glass and contained in a float glass making furnace, i.e. float bath and flowing the molten glass to the downstream with the molten glass being floated on the surface of the molten metal, thereby forming the molten glass into a shape of plate. The invention relates also to a float glass manufacturing apparatus capable of implementing such float glass manufacturing method.

### BACKGROUND ART

Conventionally, with one type of technique of manufacturing float glass of the above-noted type, if colored glass is to be manufactured, a coloring substance (e.g. Mn, Cr, Fe, V, Co, Ni, Cu, Ag, Au, Se, etc.) is mixed in the molten glass; and under this mixed condition, the glass is fed onto the molten metal (e.g. Sn) in the float glass making furnace to flow downstream, whereby a colored glass plate is manufactured.

Generally, the atmosphere in the float glass making furnace is provided as a reducing atmosphere containing a few percent of hydrogen. This technique will be referred to as "First Conventional Technique" hereinafter.

The various coloring substances exemplified above develop different colors from each other. In recent years, a grayish coloring has been popular. In such case, nickel (Ni) is often employed as the coloring substance capable of providing stable color development.

However, when nickel is employed as the coloring substance, there is the problem of generation of whitish cloud, so-called "haze", in the surface of the colored glass formed with solidification of the molten glass.

Namely, this whitish cloud results from the process that nickel ions present adjacent the surface or surface layer of the molten glass are reduced under the reducing atmosphere to be formed into metallic nickel in the form of micro-spheres (strictly speaking, NiSn alloy formed by bonding reaction of Sn vapor within the atmosphere), which metallic nickel diffuses light, thus creating the whitish cloud.

As a conventional float glass manufacturing method aimed at preventing such whitish cloud, Patent Document 1, identified below, discloses a technique in which the atmosphere in the float glass making furnace is prepared so as to be totally free from hydrogen or to contain only a reduced concentration thereof and the furnace is filled not with hydrogen but with oxygen and an inactive gas (nitrogen, noble gas), thus creating an environment which hardly leads to reduction of nickel ions. This technique will be referred to as "Second Conventional Technique" hereinafter.

Incidentally, for making a standard, non-colored, glass plate, the technique is performed without adding the above-described coloring substance to the glass material.
[Patent Document 1] Japanese Patent Application "Kokai" No. 51-1516

In the case of the float glass manufacturing method of the Second Conventional Technique, the generation of the whitish cloud on the surface of the colored glass is restricted indeed. On the other hand, as this technique employs an oxidizing atmosphere in the furnace, there tends to form oxidized substance (e.g. tin oxide) on the surface of the molten metal (e.g. Sn). Presence of such oxidized substance results in reduction in the smoothness of the supporting surface of the molten metal which supports the molten glass, thus resulting in also reduction in the smoothness of the supported surface (lower surface) of the molten glass which is supported on and placed in close contact with this molten metal surface.

Further, regardless of presence/absence of coloring to the glass, in the atmosphere in the furnace, vaporized substance of the molten metal is floating, and this vapor may condensate on e.g. the ceiling of the furnace and then drop onto the glass plate which is being formed, and adhere thereto.

If such substance remains adhered to the glass surface, this can cause poor appearance in case this glass is made into a windshield for an automobile. Or, if the glass is formed into a liquid crystal display or plasma display panel, the substance can cause displaying failure due to electrical disconnection or short circuit. This is not desirable.

In view of the above, the primary object of the present invention is to provide an improved float glass manufacturing technique which can overcome the above-described problems and which allows manufacture of superior glass plate with maintaining a higher degree of smoothness required for float glass and with effective restriction of attachment and/or precipitation of foreign substance on the glass surface.

### SUMMARY OF THE INVENTION

For accomplishing the above-noted object, according to a first characterizing feature of the present invention, in a method for manufacturing a float glass, comprising the steps of: feeding molten glass onto molten metal having a specific gravity greater than the molten glass and contained in a float glass making furnace and flowing the molten glass to the downstream with the molten glass being floated on the surface of the molten metal, thereby forming the molten glass into a shape of plate, the method comprising the step of causing a foreign-substance entrapping metal under its molten state to contact an upper surface of the molten glass on the molten metal, the foreign-substance entrapping metal having a melting point lower than the softening point of the glass and being capable of entrapping either a precipitate which is precipitated on the upper surface of the molten glass or an attachment which is formed thereon.

With this characterizing feature, as the foreign-substance entrapping metal described above, under its molten state, is caused to contact an upper surface of the molten glass on the molten metal, precipitate if any which has been precipitated on the upper surface of the molten glass or attachment if any which has been formed thereon, can be entrapped by the molten foreign-substance entrapping metal, so that such precipitate or attachment can be removed from the upper surface of the molten glass.

Therefore, even when the precipitate is a substance which can cause the whitish cloud, it is possible to prevent generation of whitish cloud in the surface of the colored glass and to prevent residual of attachment to the surface.

Namely, unlike the Second Conventional Technique, there is no need of providing the environment inside the furnace with the oxidizing atmosphere in order to prevent whitish cloud. Therefore, even when the environment inside the furnace is provided with a hydrogen-containing reducing atmosphere like the First Conventional Technique, the precipitate which can cause the whitish cloud has been removed. Further, it is also possible to prevent generation of oxide of the molten metal on the surface. Hence, like the First Conventional Technique, it is possible to maintain a high degree of surface flatness for the molten glass.

According to a second characterizing feature of the present invention, said precipitate or said attachment comprises tin or tin alloy and said molten metal and said foreign-substance entrapping metal respectively comprise tin.

It is known that e.g. nickel, when added as a coloring substance, in molten glass, allows relatively easy grayish coloring, thus providing greater stability in color development of colored glass. In this case, the precipitate formed on the surface or adjacent the surface layer of the molten glass is tin nickel alloy.

Further, in case the molten metal is tin, there is vaporization of tin metal in the furnace atmosphere. Then, if this tin vapor condensates and drips, tin will attach, as an attachment, to the upper surface of the glass plate which is forming.

With the above-described construction, the precipitate formed on the surface or adjacent the surface layer of the molten glass or the attachment is tin or tin alloy and the foreign-substance entrapping metal is tin. Therefore, the precipitate or the attachment can be entrapped and removed by the foreign-substance entrapping metal in a very efficient manner.

Further, if the molten metal and the foreign-substance entrapping metal comprise a same kind of material, even if they become mingled together to some extent, this will hardly cause any adverse effect. For this reason, a system to be provided for separation therebetween can be constructed rather roughly, i.e. with lower precision. As a result, the system cost can be reduce advantageously.

According to a third characterizing feature of the present invention, in an apparatus for manufacturing a float glass product, comprising a float glass making furnace containing therein molten metal having a specific gravity greater than molten glass; feeding means for feeding the molten glass onto the molten metal; and forming means for forming the molten glass into a shape of plate while flowing the molten glass to the downstream side and floating on the surface of the molten metal, the apparatus further comprises: a foreign-substance entrapping metal contacting means for causing a foreign-substance entrapping metal under its molten state to contact an upper surface of the molten glass on the molten metal, the foreign-substance entrapping metal having a melting point lower than the softening point of the glass and being capable of entrapping either a precipitate which is precipitated on the upper surface of the molten glass or an attachment which is formed thereon.

The apparatus with the above-described characterizing feature can be employed as it is for implementing the inventive method for manufacturing float glass, so that the inventive float glass manufacturing method can be implemented with even higher efficiency.

As a result, by causing the foreign-substance entrapping metal under its molten state to contact the upper surface of the molten glass on the molten metal, the precipitate or attachment formed on the surface of the molten glass can be entrapped and removed.

Therefore, even when the precipitate is a substance which can cause the whitish cloud, it is possible to prevent generation of whitish cloud in the surface of the colored glass and to prevent residual of attachment to the surface.

Further, by employing reducing atmosphere inside the furnace, it is possible to prevent formation of oxides of the molten metal on the surface, so that a high degree of surface smoothness for the molten glass can be maintained.

### DESCRIPTION OF PREFERRED EMBODIMENTS

Preferred embodiments of the present invention will be described in details with reference to the accompanying drawings.

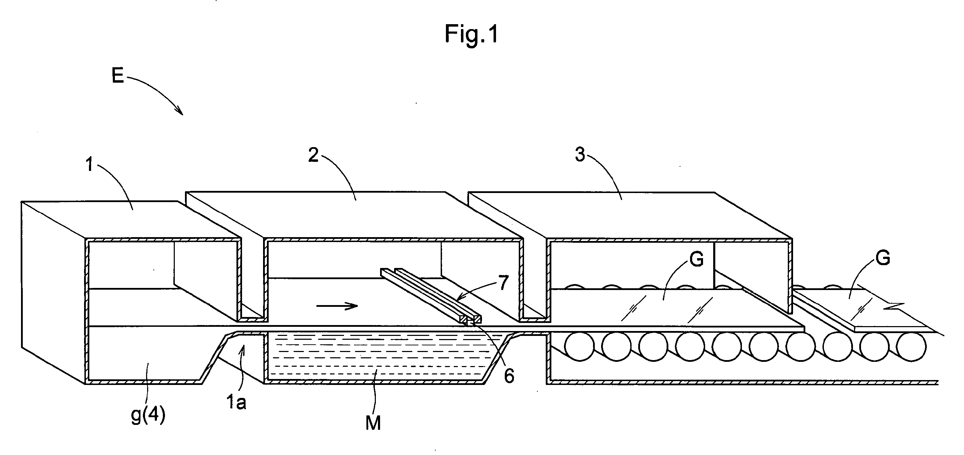

Fig. 1 shows a float glass manufacturing apparatus (referred to simply as "glass manufacturing apparatus" hereinafter) E relating to one embodiment of the invention. This glass manufacturing apparatus E includes a glass melting furnace 1 for melting glass to obtain molten glass (g), a float glass making furnace (corresponding to the so-called "float bath") 2 containing therein molten tin (corresponding to "molten metal") M, and a slow cooling furnace 3 for slowly cooling colored glass G formed into a plate shape by the float glass making furnace 2.

In the series of manufacturing process from the glass melting furnace 1, the float glass making furnace 2 and the slow cooling furnace 3, the molten glass (g) is formed into a colored glass G in the form of a band plate having a predetermined thickness.

The glass melting furnace 1 incorporates a feeding means 1a capable for feeding the molten glass (g) onto the molten tin M in the float glass making furnace 2. The molten glass (g) employed in this embodiment contains nickel as a coloring substance 4 for coloring the glass.

Within the float glass making furnace 2, the molten glass (g) is caused to flow to the downstream side while floating on the surface of the molten tin M, in the course of which the molten glass (g) is extended into a plate-like shape and gradually solidified. Under the flowing down condition, the molten glass (g) is floating on the smooth surface of the molten tin M, with the glass (g) forming a layer of a predetermined thickness. Therefore, when the glass is solidified, the glass is formed like a flat plate. Incidentally, the molten tin M has a greater specific gravity than the molten glass.

Also, at the space upwardly of the molten tin M, there is provided a reducing atmosphere containing a few percent of hydrogen.

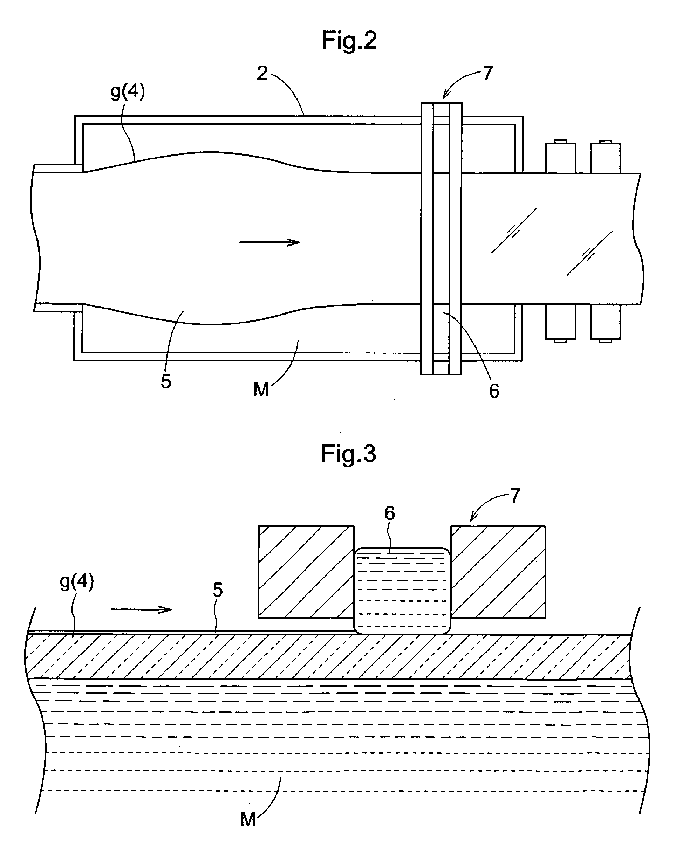

Therefore, on the surface of the molten glass (g), the reducing atmosphere will surround ions of the nickel as the coloring substance 4 added to the molten glass (g). Hence, the nickel ions will tend to be reduced by this atmosphere, so that the nickel will be precipitated as fine metallic nickel grains (strictly, NiSn alloy containing tin dissolved therein from the atmosphere). If these precipitates 5 (metallic nickel) are allowed to remain on the surface of the colored glass, they will cause diffusion of light incident thereto, thereby causing whitish cloud commonly known as "haze" (see Fig. 1 and Fig. 2).

The glass manufacturing apparatus E according to this embodiment includes a foreign-substance entrapping metal contacting means 7 for causing molten tin (corresponding to "foreign substance entrapping metal") 6 to contact the upper surface of the molten glass (g) inside the float glass making furnace 2 while the molten glass (g) is not yet solidified and being formed. The molten tin 6 entraps the precipitates 5 present if any adjacent the upper surface of the molten glass (g), thus removing the precipitates 5, hence preventing generation of the whitish cloud or "haze".

The temperature inside the float glass making furnace 2 under the above-described forming condition ranges from 600 to 1000°C for example. Also, the melting point (232°C) of the molten tin 6 is lower than the softening point (730°C) of the glass.

On the other hand, the space upwardly of the molten tin M contains vapor of vaporized tin metal. If this vapor is condensed on e.g. the ceiling wall surface of the furnace and then drops onto the upper surface of the molten glass (g), the tin will be attached to the upper surface of the molten glass (g). In the case of the construction of the present invention, however, as the foreign-substance entrapping metal contacting means 7 is provided for causing the molten tin 6 to come into contact with the upper surface of the molten glass (g), such attachment too can be removed.

Though not shown, the foreign-substance entrapping metal contacting means 7 can include a feeding device for causing the molten tin 6 to flow on the molten glass (g) in a direction (referred to as "width direction of molten glass (g)" hereinafter) transverse to the flowing direction of the molten glass (g). The foreign-substance entrapping metal contacting means 7 can further include a guide for guiding the flowing molten tin 6 along the width direction of the molten glass (g) while contacting the upper surface of this molten glass (g) as well as a recovering device for recovering the molten tin 6 which has been moved on the molten glass (g) along the width direction.

Next, the specific construction of the foreign-substance entrapping metal contacting means 7 relating to this embodiment will be described.

As shown in Fig. 3, the foreign-substance entrapping metal contacting means 7 is disposed over the molten glass (g) such that the molten tin 6 as the foreign substance entrapping metal may be oriented transverse along the width direction of the molten glass (g) and also this molten tin 6 may contact the upper surface of the molten glass (g).

The molten tin 6 flows in a groove portion provided in the foreign-substance entrapping metal contacting means 7. This groove portion is open at its bottom so as to allow the molten tin 6 to contact the upper surface of the molten glass (g).

Downwardly of the foreign-substance entrapping metal contacting means 7, in order to prevent contact between this foreign-substance entrapping metal contacting means 7 and the molten glass (g) flowing downstream, there is provided a gap or clearance having a predetermined distance from the upper surface of the molten glass (g) to the bottom face of the foreign-substance entrapping metal contacting means 7.

The above-described predetermined distance should be set, depending on the surface tension of the molten tin 6, so as to prevent leakage of the molten tin 6 out of the groove into the gap.

Next, there will be described a float glass manufacturing method using the glass manufacturing apparatus E having the above-described construction.
[1] The molten glass (g) is fed onto the molten tin M in the float glass making furnace 2.
   Then, the molten glass (g) is allowed to flow downstream as floating on the molten tin M in the float glass making furnace 2, in the course of which the molten glass (g) is formed progressively thinner, wider and longer (see Fig. 2).
[2] Inside the float glass making furnace 2, while the molten glass (g) has not yet been solidified, the foreign-substance entrapping metal contacting means 7 causes the molten tin 6 to contact the upper surface of this molten glass (g) transversely along its width direction, thus removing any precipitates 5 formed (see Fig. 3).

### [Examples]

The condition of whitish cloud in colored glass was photographed by a photomicrography.

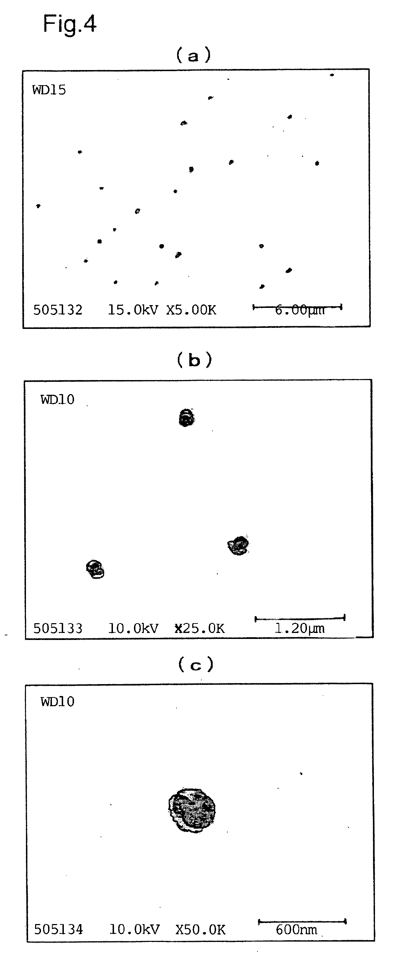

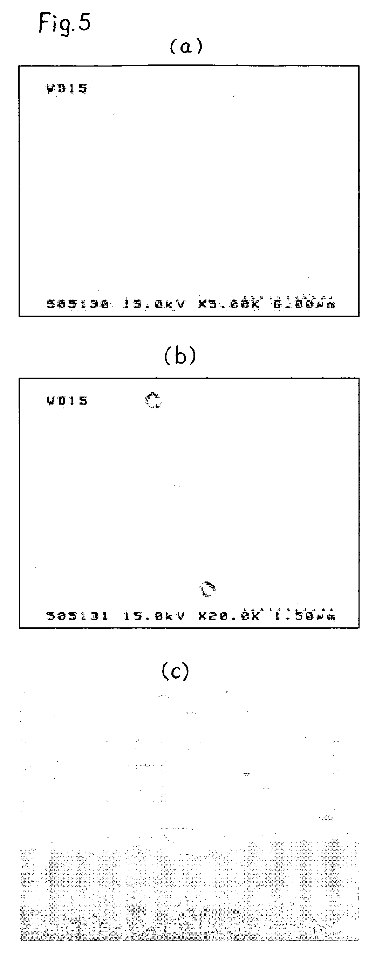

Fig. 4 shows a photographed image of the surface of glass plate without removal of precipitates 5 therefrom. Fig. 5 shows a photographed image of the surface of the glass plate, with removal of the precipitates 5 through the contact between the molten tin 6 and the upper surface of the molten glass realized by the foreign-substance entrapping metal contacting means 7.

More particularly, Figs. 4 (a), (b) and (c) show photographed images of the result with 5000 times, 25000 times and 50000 times of magnification, respectively. In these figures, the precipitates are shown as whitish dots.

Figs. 5 (a) and (b) show photographed images of the result with 5000 times and 20000 times of magnification, respectively. In these figures, only removal trace of precipitate removal is shown. Fig. 5 (c) shows a photographed image of the removal traces with a magnification of 100000 times. As shown, it is understood that the removal trace is formed as a recess.

As described above, as precipitates are removed from the surface of glass plate, generation of whitish cloud can be prevented.

### [Other Embodiments]

Next, some other embodiments of the present invention will be described.
<1> The coloring substance is not limited to nickel described in the foregoing embodiment. Instead, Mn, Cr, Fe, V, Co, Cu, Ag, Au, Se, etc. can be used singly or in combination. Hence, these kinds of substances are generically referred to as "coloring substance" herein.
<2> The precipitate is not limited to metallic nickel described in the foregoing embodiment. Rather, with change of the coloring substance, a substance corresponding thereto will be precipitated.
<3> The foreign-substance entrapping metal is not limited to tin described in the foregoing embodiment. The entrapping metal can be e.g. Sn, Pb, Bi, In, Ga, Tl, singly or an alloy thereof in combination. Hence, these are generically referred to as "foreign-substance entrapping metal" herein.
<4> The molten metal is not limited to tin described in the foregoing embodiment. The molten metal can be e.g. Sn, Pb, Bi, In, Ga, Tl, singly or an alloy thereof in combination. Hence, these are generically referred to as "molten metal" herein.

Incidentally, although some reference marks and numerals have been used for facilitating reference to the accompanying drawings, it is understood that the present invention is not limited to the constructions shown in the drawings. One skilled in the art could readily modify the invention without departing from the gist of the invention defined in the appended claims.

### [Industrial Applicability]

The present invention can be employed in a method for manufacturing a float glass, comprising the steps of feeding molten glass onto molten metal having a specific gravity greater than the molten glass and contained in a float glass making furnace and flowing the molten glass to the downstream with the molten glass being floated on the surface of the molten metal, thereby forming the molten glass into a shape of plate.

### BRIEF DESCRIPTION OF THE DRAWINGS

Fig. 1 is a partially cutaway perspective view (conceptual diagram) showing a float glass manufacturing apparatus,
Fig. 2 is a plan view (conceptual diagram) showing a float glass making furnace,
Fig. 3 is a side view in section (conceptual diagram) showing the float glass making furnace,
Fig. 4 are explanatory views showing microphotographs of a glass plate surface, and
Fig. 5 are explanatory views showing microphotographs of a glass plate surface.

### [Description of Reference Marks]

1a feeding means
2 float glass making furnace
4 coloring substance
5 precipitate (metallic nickel)
6 molten metal (corresponding to "foreign-substance entrapping metal")
7 foreign-substance entrapping metal contacting means
g molten glass
M tin (corresponding to "molten metal")

## Claims

1. A method for manufacturing a float glass, comprising the steps of feeding molten glass onto molten metal having a specific gravity greater than the molten glass and contained in a float glass making furnace and flowing the molten glass to the downstream with the molten glass being floated on the surface of the molten metal, thereby forming the molten glass into a shape of plate;
wherein the method comprises the step of causing a foreign-substance entrapping metal under its molten state to contact an upper surface of the molten glass on the molten metal, the foreign-substance entrapping metal having a melting point lower than the softening point of the glass and being capable of entrapping either a precipitate which is precipitated on the upper surface of the molten glass or an attachment which is formed thereon.

2. The float glass manufacturing method according to claim 1, wherein said precipitate or said attachment comprises tin or tin alloy and said molten metal and said foreign-substance entrapping metal respectively comprise tin.

3. An apparatus for manufacturing a float glass product, comprising a float glass making furnace containing therein molten metal having a specific gravity greater than molten glass; feeding means for feeding the molten glass onto the molten metal; and forming means for forming the molten glass into a shape of plate while flowing the molten glass to the downstream and floating on the surface of the molten metal;
wherein the apparatus further comprises: a foreign-substance entrapping metal contacting means for causing a foreign-substance entrapping metal under its molten state to contact an upper surface of the molten glass on the molten metal, the foreign-substance entrapping metal having a melting point lower than the softening point of the glass and being capable of entrapping either a precipitate which is precipitated on the upper surface of the molten glass or an attachment which is formed thereon.
